# EUROPEAN PATENT APPLICATION

(11) **EP 4 614 370 A1**
(43) Date of publication of application: **10.09.2025**
(21) Application number: 25161190.1
(22) Date of filing: 03.03.2025
(51) Int. Cl.: G06F 21/57

(54) **AUTOMATED IDENTIFICATION OF VULNERABLE SOFTWARE COMPONENTS**

(30) Priority: 06.03.2024 US 202463561852 P; 18.02.2025 US 202519056205
(71) Applicant: Dynatrace LLC, Waltham, MA 02451 (US)
(72) Inventor: ACHLEITNER, Stefan, Linz (AT); AMMER, Simon, Linz (AT); BUZEK, Benjamin, Linz (AT)
(74) Representative: Bittner, Thomas L.

(57) **Abstract**

An automated identification of vulnerable software components is presented. The objective to find a method for the automatic identification of CVE affected software components through source-code parsing and text analysis. The method shall reduce manual work to a minimum and ensure a high level of data quality. The objective is solved by the computer-implemented method for identifying vulnerable software, comprising: receiving a software package; unpacking source code files for multiple versions of the software package; retrieving an entry for the software package from a vulnerability database; retrieving a patch for the software package; determining changes made by the patch to source code files of the software package; and determining whether the changes were made to a given version of software and reporting the given version of software as vulnerable in response to a determination the changes were absent from the given version of software.

## Description

### Field

The disclosure concerns the field of information technology. In particular, the disclosure concerns the automated identification of vulnerable software components, e.g., one or multiple functions, one or multiple classes, or one or more versions of a software package, through source-code or bytecode parsing and text analysis. The identified software components shall be considered to be affected by one or more Common Vulnerabilities and Exposures, short CVE.

### Background

In prior art, the identification of vulnerable software code is done manually. In case a new vulnerability of a software component is detected, the vulnerability is added to a vulnerability database. One well known vulnerability database is the National Vulnerability Database (NVD) provided by the National Institute of Standards and Technology (NIST). Many other vulnerability databases, also called CVE databases, hosted by different institutions in different countries, exist. After detecting the vulnerability, the software component causing the vulnerability needs to be identified. Typically, an end-user of software cannot identify the vulnerable software component for lack of technical competency and due to the fact that the end-user can access the machine- or bytecode of the software only. In order to find the root cause of a vulnerability, the source-code of the vulnerable software component needs to be analyzed. Currently, many software products are at least partially based on open-source software components, such as packages, classes, functions/methods or software libraries. The advantages of open-source software are widely acknowledged due to the broad availability of different software components in many different programming languages for many different use cases. In addition to the readily availability of such components, advanced functionalities exist, such as references from a vulnerability database to a source-code repository hosting the source-code, such as GitHub, Bitbucket etc. Typically, developers of software components are able to identify the cause of the vulnerability. In some cases, the developers are supported by security researchers. After identifying the vulnerability, efforts are made to remedy the vulnerability. In most cases, an updated version of the affected software component is published in a source-code repository (called "commit"), and in addition, a link to the CVE identifying the vulnerability is posted. As can be seen from the above, this process involves many different manual steps, involves different stakeholders (software developers, security researchers, database providers, source-code repositories....), and is based on information from different sources.

The above process of extracting vulnerable software components is sometimes performed by specialized companies providing security information to interested parties, such as software manufacturers. Such companies provide security feeds to interested parties listing detailed information about vulnerable software components, such as names of packages, classes, functions, affected versions etc. These security feeds are compiled for one or few of the most widely used programming languages, such as Java and JavaScript, only, such that there is a need to cover additional languages, such as Go, C#, .NET, Rust, PHP etc. In addition, there is a need to shorten the process of identifying vulnerable software components and to improve the quality of the information.

How this process can be automated and how the quality of identified vulnerable software components can be improved is not known in the prior art. In particular, the time from detecting a new vulnerability to patching the affected software component or mitigating the risk shall be reduced and/or the quality of the information shall be improved.

This section provides background information related to the present disclosure which is not necessarily prior art.

### Summary

The objective of the disclosure is to find a process for the automatic identification of CVE affected software components through source-code or byte-code parsing and text analysis. By automating the process of vulnerable function identification, manual work shall be reduced to a minimum. The quality of the automatic identification of CVE affected software shall be increased by combining results from multiple, independent sources. Note that one single data-source by itself cannot assumed to be correct, as function names in CVEs might be misspelled or simply be wrong, a commit to a source-code repository, such as GitHub, patching a vulnerability may contain not only code changes related to the CVE but also unrelated changes etc.

For solving the problem, a computer-implemented method for identifying vulnerable software according to the independent claim 1 is provided. Further, a non-transitory computer-readable medium is provided. Embodiments are the subject matter of dependent claims in the appended set of claims.

According to a first aspect of the disclosure, the objective is solved by a computer-implemented method for identifying vulnerable software, comprising: receiving, by a computer processor, a software package; for two or more versions of software associated with the software package, unpacking, by the computer processor, source code files for the two or more version of software; retrieving, by the computer processor, an entry for the software package from a vulnerability database, where the entry in the vulnerability database relates to a known vulnerability of the software package; retrieving, by the computer processor, a patch for the software package fixing the known vulnerability; determining, by the computer processor, changes made by the patch to source code files of the software package; and for each of the two or more versions of software associated with the software package, determining, by the computer processor, whether the changes were made to a given version of software and reporting the given version of software as vulnerable in response to a determination that the changes were absent from the given version of software.

After receiving or downloading typically multiple versions of a software package from a package repository, the software packages are unpacked such that the source-code files contained in a package are available on a hard drive. Typically, source code files are unpacked into a folder, which may also be the root folder of a drive. In the next step, an entry describing a known vulnerability of the software package is retrieved, typically by downloading it from a vulnerability database. Next, a patch for the software package fixing the known vulnerability is retrieved, typically by downloading it from a source-code repository such as GitHub. In many cases, the link to the patch is contained in the entry in the vulnerability database. In some other cases, a source code repository hosting the patch comprises a link to the entry in the vulnerability database. In both cases, it is evident that the patch is meant to fix the vulnerability of the software package. Subsequently, the changes made by the patch to the source-code files are determined by text parsing and text analysis. Finally, for each version of the software package the computer processor decides whether the changes are present in the source-code files of the said version of the software package. In case the changes can be found, the version is considered to be not vulnerable, otherwise, the version is considered to be vulnerable.

Typically, the information whether versions of the software package are vulnerable or not are reported to the method customer, which can be a human or a software component calling the method. E.g., the given version of the software package is reported as patched in response to a determination that the changes are present in the given version of software.

According to an advantageous embodiment of the method, non-source code files from the patch are removed from the files of the patch before the step of determining changes made by the patch. By doing so, the number of files to be analyzed is reduced.

In many cases, retrieving a patch for the software package comprises extracting a link to the patch from the retrieved entry in the vulnerability database and downloading the patch from a source code repository using the link to the patch. The extraction of the link can be done by text parsing, text analysis or by a large language model (short LLM).

The determination whether the changes made by the patch are present in a specific version of the source code package typically includes comparing a text string from the patch to text in source code files of the given version of software, e.g., by text parsing and text analysis.

The process of determining whether the changes were made in a given version of software may include checking whether one or more lines from the patch have been added to a source code file.

According to a very beneficial embodiment, short lines of code in lines being added to a patched file comprising less than a predefined number of characters, e.g., 5 or 6 characters, are ignored in the determination whether the changes were made to a given version of software or not. Alternatively or in addition to that, code lines consisting only of very common code statements not containing any custom code are removed from lines being added to a patched file too.

In case multiple lines were added to a source code file, determining whether the changes were made to a given version of software includes checking whether one or more lines from the patch have been added to the source code files of the given version of software in the same sequence as in the patch. Instead or in addition to considering the sequence of code changes, the locations of code changes can be considered too, such that determining whether the changes were made to a given version of software includes checking whether one or more lines from the patch have been added to a source code files at the same or roughly the same location as in the patch.

The process of determining whether the changes were made to a given version of software may include checking whether one or more lines from the patch have been removed from a source code file.

According to another very beneficial embodiment, short lines of code in the lines being removed from a patched file comprising less than a predefined number of characters, e.g., 5 or 6 characters, are ignored in the determination whether the changes were made to a given version of software or not. Alternatively or in addition to that, code lines consisting only of very common code statements not containing any custom code are removed from the lines being added to a patched file too.

In case multiple lines were removed from a source code file, determining whether the changes were made to a given version of software may include checking whether one or more lines from the patch have been removed from the source code files of the given version of software in same sequence as in the patch. Instead or in addition to considering the sequence of code changes, the locations of the code changes can be considered too, such that determining whether the changes were made to a given version of software includes checking whether one or more lines from the patch have been removed from a source code file at the same or roughly the same location as in the patch.

In addition to considering one or multiple lines having been added or removed from a patched source code file, determining whether the changes were made to a given version of software includes accessing a file history for the given source code file and, for the given version of software, analyzing the given version of software using corresponding name for the given source code file from the file history. This is due to the fact that commits to a code repository may not just amend code but can also change the name(s) of the source code files.

Reporting a version of the software package as vulnerable or not vulnerable can comprise reporting i) a version number for the given version of software, ii) a group identifier for the given version of the software in a code repository, and iii) an artifact identifier for the given version of the software in a code repository. The combination of version number, group identifier, and artifact identifier is sometimes referred to as Maven coordinates of the package. In the method, coordinates for the given version of software may be reported in a Maven code repository

In response to receiving a report that a specific version of a software package is vulnerable, the topology of the computer system can be changed such that the vulnerable software component is no longer directly available from the internet. E.g., this can be achieved by placing a firewall between the internet and the vulnerable software component. Alternatively to that, the vulnerable software component is updated / patched such that the software component is no longer vulnerable.

According to another aspect of the disclosure, the objective is solved by a non-transitory computer-readable medium having computer-executable instructions that, upon execution of the instructions by a processor of a computer, cause the computer to: receive a software package; for two or more versions of software associated with the software package, unpack source code files for the two or more version of software; retrieve an entry for the software package from a vulnerability database, where the entry in the vulnerability database relates to a known vulnerability of the software package; retrieve a patch for the software package fixing the known vulnerability; determine changes made by the patch to source code files of the software package; and for each of the two or more versions of software associated with the software package, determine whether the changes were made to a given version of software and report the given version of software as vulnerable in response to a determination the changes were absent from the given version of software.

Further areas of applicability will become apparent from the description provided herein. The description and specific examples in this summary are intended for purposes of illustration only and are not intended to limit the scope of the present disclosure.

### Drawings

The accompanying drawings, which are incorporated in and constitute part of this specification, illustrate embodiments of the disclosure and together with the description, serve to explain the principles of the disclosure. The embodiments illustrated herein are presently preferred, it being understood, however, that the disclosure is not limited to the precise arrangements and instrumentalities shown, wherein:
- FIG. 1: shows the content of the Maven source code repository for io/whitesource/curekit,
- FIG. 2: shows the files in the Maven source code repository of Fig. 1 for version 1.0.0 of the CureKit software package,
- FIG. 3: shows the content of the NVD vulnerability database for the entry CVE-2022-23082,
- FIG. 4: shows the content of the GitHub source code repository for the patch 110 shown in Fig. 3,
- FIG. 5: shows the "History" button 240 in the "Browse files" section of the GitHub source code repository of Fig. 4,
- FIGs. 6a and 6b: show the history of the file FileSecurityUtils.java in the GitHub source code repository of Figs. 4 and 5,
- FIG. 7: shows the content of the NVD vulnerability database for entry CVE-2014-3576,
- FIG. 8: shows the content of the GitHub source code repository for the patch 310 shown in Fig. 7,
- FIG. 9: shows the content of the NVD vulnerability database for entry CVE-2022-42004,
- FIG. 10: shows the content of the GitHub source code repository for the patch 410 shown in Fig. 9, and
- FIG. 11: shows a schema of the main steps in performing the computer-implemented method for identifying vulnerable software.

### Detailed description

In the following paragraphs, multiple application examples are given for the identification of vulnerable software components.

In a first application example for the identification of vulnerable software components, multiple versions of the CureKit software package are checked whether they are vulnerable to CVE-2022-23082. CureKit is a security library mostly used by the WhiteSource Cure self-fixing product.

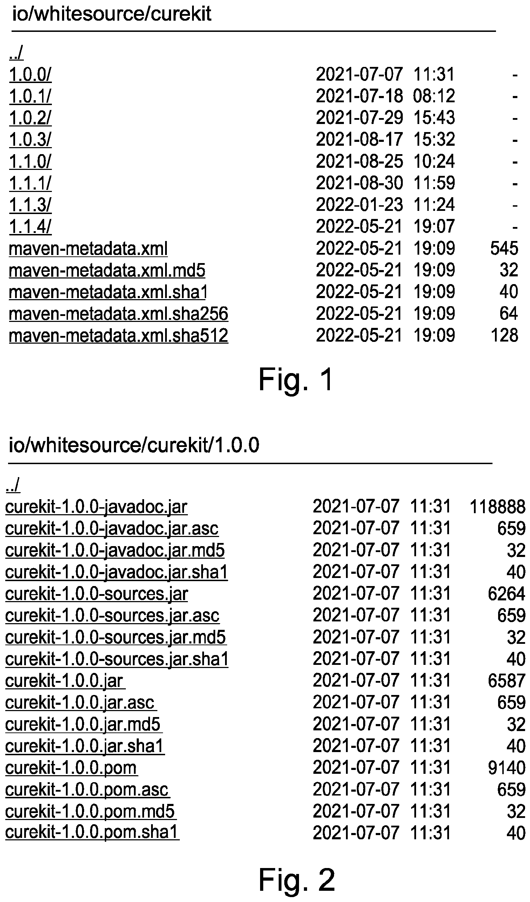

All versions of the CureKit package, in February 2024 these are the versions 1.0.0, 1.0.1, 1.0.2, 1.0.3, 1.1.0, 1.1.1, 1.1.3 and 1.1.4, are available in the Maven code repository repo1.maven.org/maven2/io/whitesource/curekit (see Fig. 1). As numerous open-source packages exist in many different versions, identification systems for identifying software packages were developed. Primarily for Java, the so-called "Maven coordinates" exist, consisting of the so-called "groupld", the "artifactld" and the version of the software package. To give one example: The groupld for version 1.0.0 of the CureKit package is io.whitesource, the artifactld is curekit and the version is 1.0.0. Consequently, the Maven coordinates for version 1.0.0 of the CureKit package are: io.whitesource:curekit:1.0.0.

Fig. 2 shows the contents of the Maven code repository for version 1.0.0 of the CureKit package. In a first step, JAR source code packages, e.g., for version 1.0.0 this is the file curekit-1.0.0-sources.jar, for the versions to be investigated are downloaded into a folder.

Next, the JAR files are unpacked such that the source code files for each version are located in corresponding folders. In total, 8 top level folders, curekit-1.0.0-sources...curekit-1.1.4-sources, are created. Just for example, the folder structure underneath the folder curekit-1.1.4-sources is

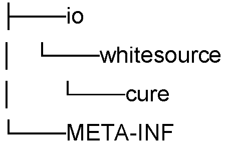

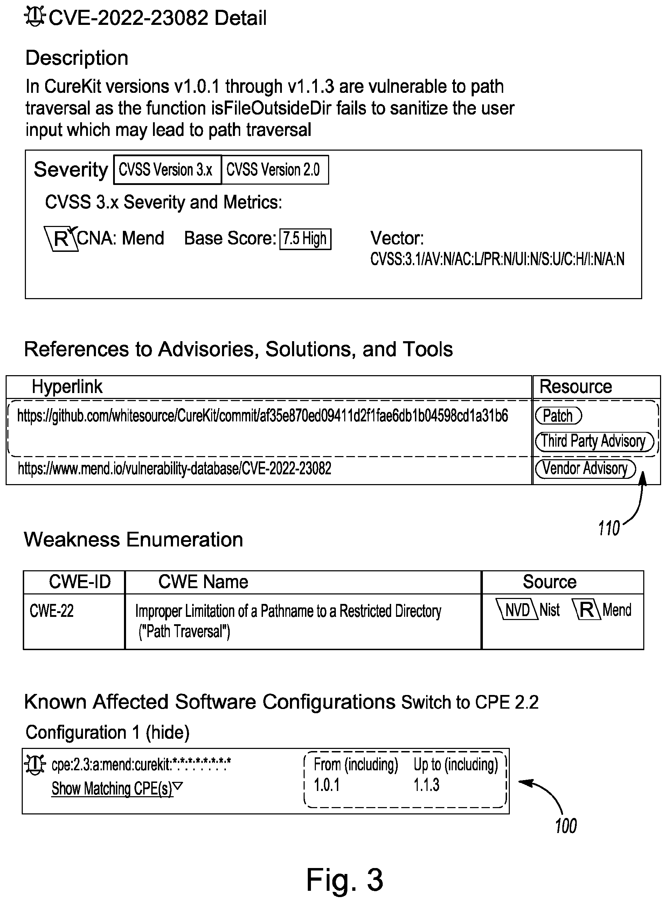

In the next step, the entry in a vulnerability database relating to the software package to be investigated, in this case the entry CVE-2022-23082 in the national vulnerability database NVD (see https://nvd.nist.gov/vuln/detail/CVE-2022-23082 and screenshot in Fig. 3) is checked. According to the entry, versions 1.0.1 to 1.1.3 of the function isFileOutsideDir are vulnerable (see field 100). In addition, the entry contains a link to a patch in the GitHub source code repository https://qithub.com/whitesource/CureKit/commit/af35e870ed09411d2f1fae6db1b04598cd1a31b6 (see field 110). Following the link to the patch, GitHub indicates that commit af35e87 changed three files, namely file .idea/libraries/Maven_org_owasp_encoder_encoder_1_2_3.xml was deleted, file src/main/java/io/whitesource/cure/FileSecurityUtils.java was amended by deleting line 25 and adding a new line 25, and 7 lines of code were added to the file src/test/java/io/whitesource/cure/FileSecurityUtilsTests.java.

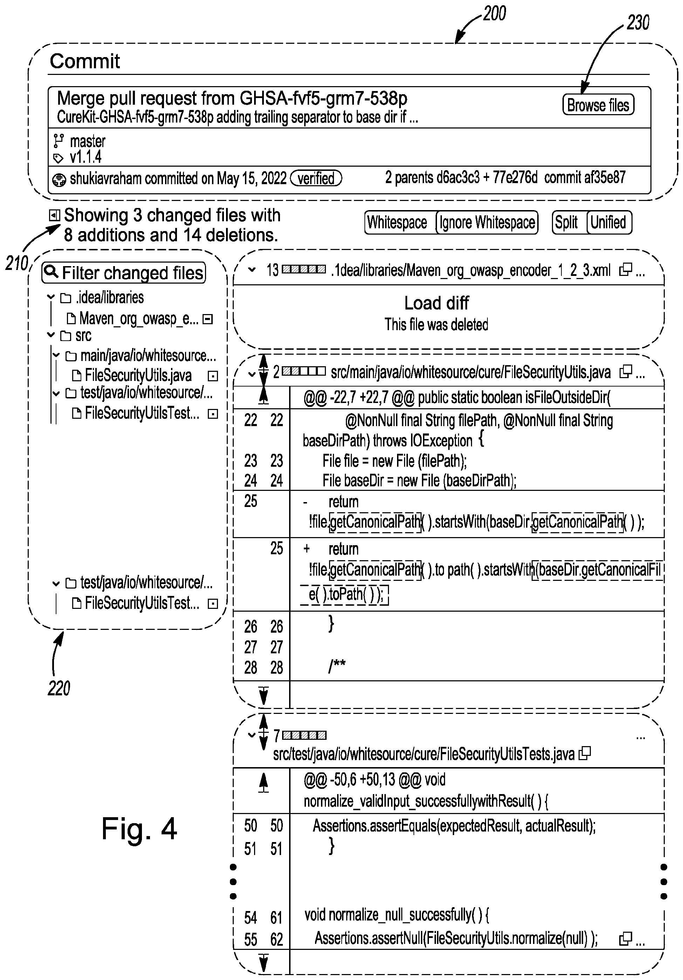

With reference to Figure 4, the number of files changed by the patch is given in field 210, in the file tree 220 and in the listing of individual files on the right-hand side of the screen (Fig. 4).

As the last-mentioned file FileSecurityUtilsTests.java concerns testing purposes only and classes ending with Tests.java do not impact the vulnerability of a package, this file is omitted from further analysis. With respect to the first mentioned file, the xml file is not a source-code file and thus, this file is omitted from further analysis too. In file FileSecurityUtils.java, the original line 25
*return !file.getCanonicalPath().startsWith(baseDir.getCanonicalPath());* was replaced by the new line 25 *return !file.getCanonicalFile().toPath().startsWith(baseDir.getCanonicalFile().toPath());*

Hence, after filtering-out irrelevant files comprised in the patch, just one file requires further analysis whether the package is vulnerable or not. For file FileSecurityUtils.java, both the first set of lines being added to the file and the second set of lines being removed from the file contain one line each. In other words, the first set of lines being added to the patched file consists of the new line 25 mentioned above and the second set of lines being removed from the file consists of the original line 25 also mentioned above.

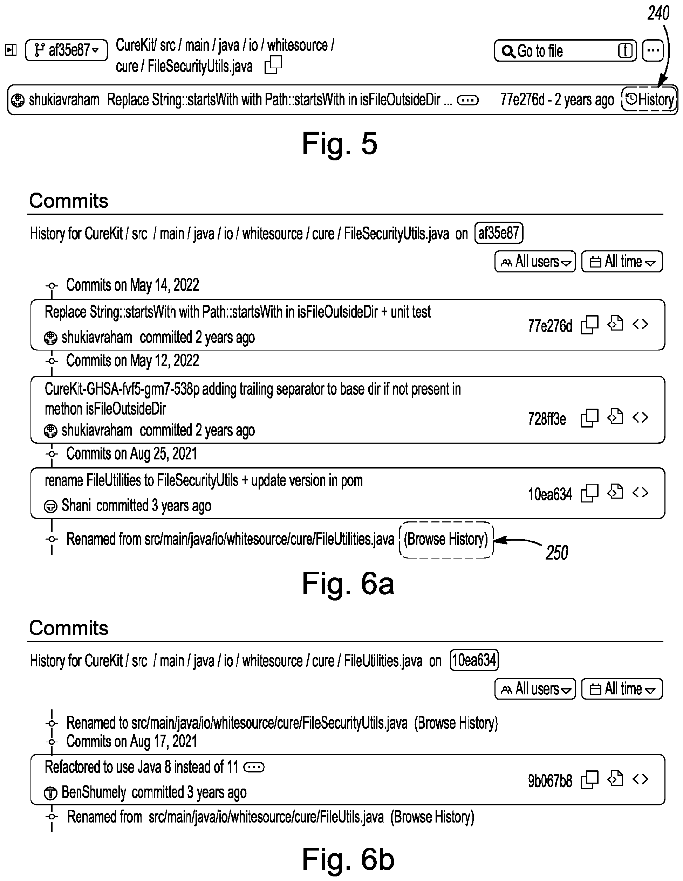

Before continuing with the next steps, the history of the file FileSecurityUtils.java is checked in the GitHub code repository. First, the "Browse files" button 230 is pressed and the file in the respective folder CureKit/src/main/java/io/whitesource/cure is selected. Doing this brings up the view shown in Fig. 5. Pressing the "History" button 240 yields the view shown in Fig. 6a and pressing the "Browse History" button 250 yields the view shown in Fig. 6b. In summary, commit 9b067b8 (version 1.0.3) renamed the file FileUtils.java to FileUtilities.java and commit 10ea634 (version 1.1.0) renamed the file to FileSecurityUtils.java. In inverse chronological order, FileSecurityUtils.java present in version 1.1.4 was renamed to FileUtilities.java in version 1.1.0, and FileUtilities.java was renamed to FileUtils.java in version 1.0.3.

Note that the history of a file can be accessed in multiple ways. Instead of browsing the web repository, the history can be accessed in a command shell by typing in respective commands. E.g., the command git diff A B, where A and B are commits respectively, brings up the differences between commit A and commit B. Note that not just amendments in files are reported but also changes in file names etc.

In the next step, the files in the downloaded and unpacked software packages are checked whether the file to be analyzed contains the first set of lines being added to the patched file and/or the second set of lines being removed from the patched file. E.g., the command in Windows/DOS for checking version 1.0.2 of the CureKit package is:

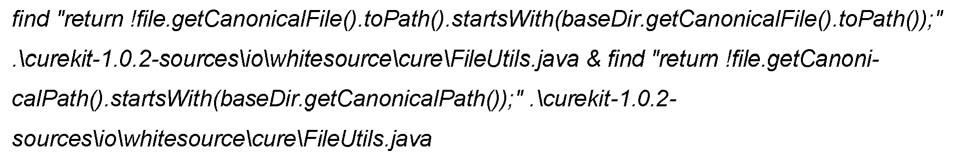

Executing these command yields the following output:

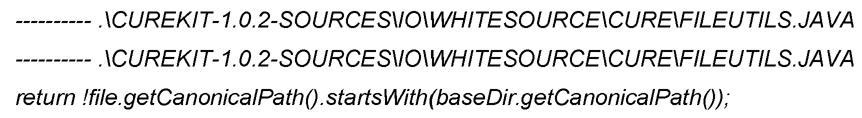

Note that instead of combining the search for the 1^{st} and 2^{nd} set of lines in one command, separate commands deliver the same results.

In summary, file FileUtils.java in version 1.0.2 does not contain the first set of lines being added to the patched file, i.e. the string *"return !file.getCanonicalFile().toPath().starts-With(baseDir.getCanonicalFile().toPath());*", however the file contains the second set of lines being removed from the patched file, i.e. the string *"return !file.getCanonicalPath().starts-With(baseDir.getCanonicalPath());*". In other words, file FileUtils.java in version 1.0.2 is vulnerable, thus version 1.0.2 of the CureKit package is vulnerable too.

Versions 1.0.0, 1.0.1 and 1.0.2 of the CureKit package contain the file FileUtils.java. Performing the analysis for the file in these versions yields that the first set of lines being added to the patched file is absent and the set of lines being removed from the patched file is present. Consequently, versions 1.0.0, 1.0.1 and 1.0.2 of the file and consequently versions 1.0.0, 1.0.1 and 1.0.2 of the CureKit package are identified as vulnerable.

Considering the change of name in version 1.0.3, the command for identifying a vulnerability in this version is:

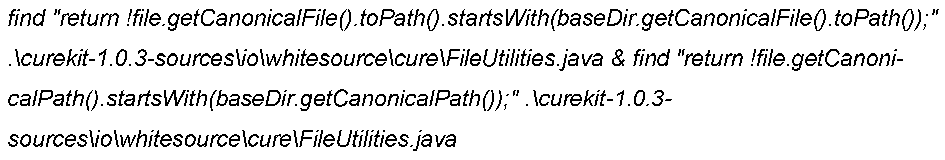

As the first set of lines being added to the patched file is absent and the second set of lines being removed from the patched file is present, also version 1.0.3 is vulnerable.

Considering the change of name in version 1.1.0, the command for identifying whether this version is vulnerable is:

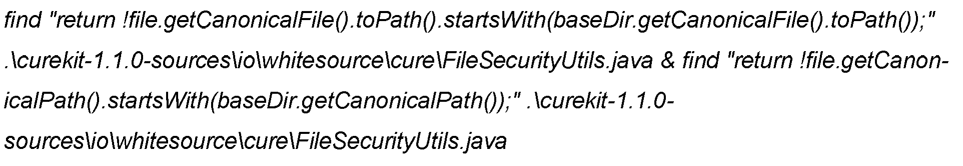

As the first set of lines being added to the patched file is absent and the second set of lines being removed from the patched file is present, also version 1.1.0 is vulnerable.

Repeating the same procedure for version 1.1.1 and 1.1.3 yields that also these versions are vulnerable.

Optionally, it is checked whether version 1.1.4 contains the first set of lines being added to the patched file and/or the second set of lines being removed from the patched file. As version 1.1.4 of the package is the patched version, it is expected that this package is reported as not-vulnerable.

The command 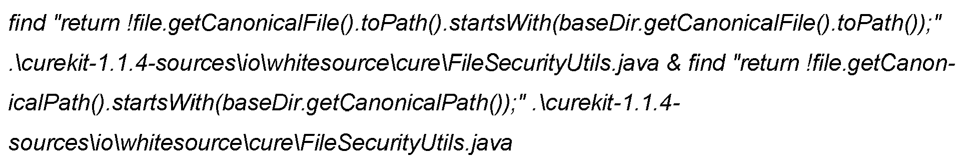 yields that the file FileSecurityUtils.java does not the 2nd set of lines being removed from the patched file but the file contains the 1st set of lines. Consequently, CureKit package version 1.1.4 is not vulnerable.

Performing the method for identifying vulnerable software packages yields that contrary to the information stated on the NVD website, also version 1.0.0 of the CureKit package is vulnerable.

In a second application example for the identification of vulnerable software components, multiple versions of the apache/activemq/activemq-broker software package are checked whether they are vulnerable to CVE-2014-3576.

All versions of the activemq-broker package, in February 2024 these are versions 5.10.0 up to 6.0.1, are available in the Maven code repository https://repo1.maven.org/maven2/org/apache/activemq/activemq-broker. As Maven contains some 65 versions, the analysis is limited to versions 5.10.0 to 5.11.0 for the purpose of this example.

In a first step, the respective JAR source code packages are downloaded into a folder. After this, the files activemq-broker-5.10.0-sources.jar, activemq-broker-5.10.1-sources.jar, activemq-broker-5.10.2-sources.jar and activemq-broker-5.11.0-sources.jar, are located in one folder. After extracting the JAR files, the files of the different versions of the package are located in the folders activemq-broker-5.10.0-sources... activemq-broker-5.11.0-sources.

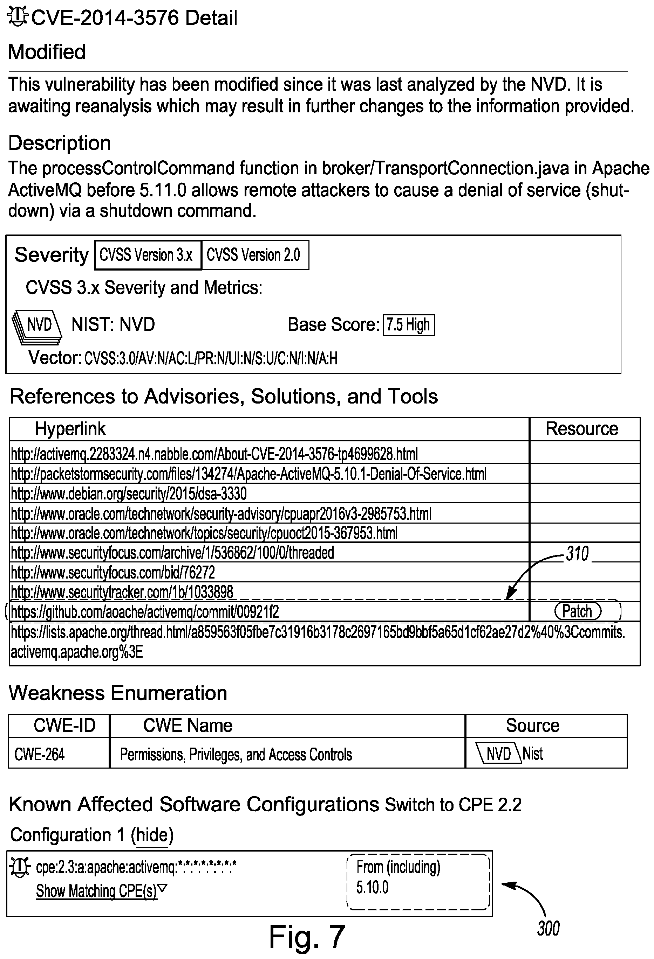

Next, the entry https://nvd.nist.gov/vuln/detail/CVE-2014-3576 in the national vulnerability database NVD is checked for the vulnerability CVE-2014-3576 (see Fig. 7). According to the entry, all versions before 5.11.0 (field 300) of the function processControlCommand are vulnerable. In addition, the entry contains a link to a patch (field 310) at the GitHub code repository https://github.com/apache/activemq/commit/00921f2.

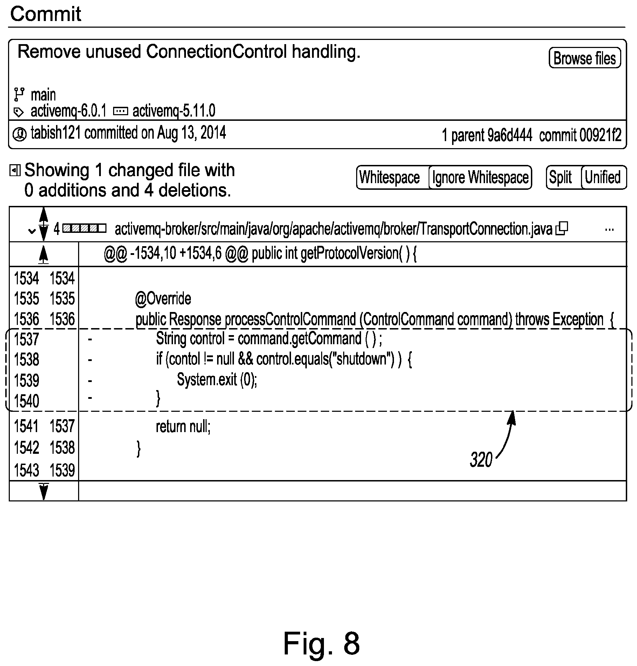

The patch (see Fig. 8) indicates that the file TransportConnection.java in the folder activemq-broker/src/main/java/org/apache/activemq/broker/ was changed to remove the vulnerability. In particular, lines 1537-1540 (see Fig. 8, field 320) 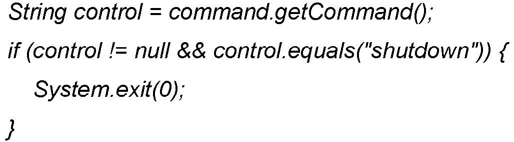 in file TransportConnection.java were removed. Contrary to the first application example, no code lines were added. In other words, the 1^{st} set of lines added to the patched file is empty and the 2^{nd} set of lines removed from the patched file contains the 4 lines printed above.

In this example, the second set of lines removed from the patched file cause the vulnerability. Instead of using the Windows/DOS shell, the Bash shell is used in this example. E.g., the command for querying whether the file TransportConnection.java in version 5.10.0 contains the 2^{nd} set of lines removed from the patched file is:

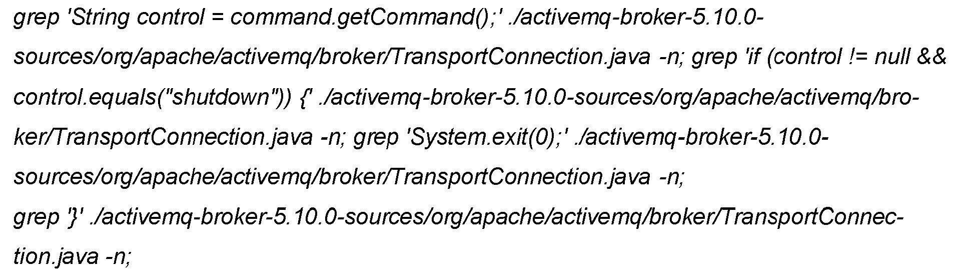

### Executing this command yields the following output:

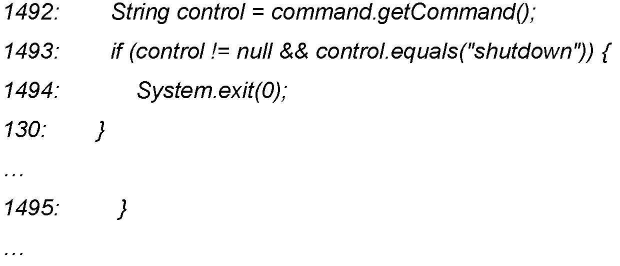

As such, the first line is present in the file at line number 1492, the second line at number 1493 and the third line at line no. 1494. The fourth line comprising "}" is, however, present multiple times, inter alia at line no. 1495. As the second set of lines causing the vulnerability are present in the file, also version 5.10.0 of the package is vulnerable. Additionally, it is found that also version 5.10.1 of the package is vulnerable.

According to a preferred embodiment of the disclosure, short lines, e.g., lines containing less or equal to 5 chars disregarding whitespace, in the set of lines, in our case the 2^{nd} set of lines removed from the patched file, are removed from the set. Doing so, removes the fourth line "}", such that the presence of three lines in file TransportConnection.java is checked only.

According to another preferred variant, the line numbers where the respective line in the file was found is taken into account when deciding whether a set of lines is present in a file or not. In this case, adding " -n" to the Bash command returns the file number(s) where the string being queried for was found. As already indicated above, the 1^{st} line was found at line 1492, the 2^{nd} line at line 1493 and the 3^{rd} line at line 1494. As the lines in the set of lines removed from the patched file are directly following each other, it is checked whether the 1^{st}, 2^{nd} and 3^{rd} lines in file TransportConnection.java are also directly following each other. As this is the case, the 2^{nd} set of lines is considered to be present in the file.

The command for checking the vulnerability of version 5.10.2 of the package 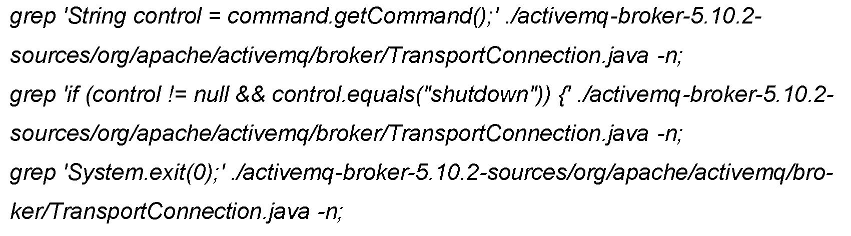 yields that these lines are not present in this package. The same applies for version 5.11.0.

Performing the method for identifying vulnerable software packages yields that contrary to the information stated in the NVD, versions 5.10.2 and 5.11.0 are not vulnerable as they do not contain the set of lines causing the vulnerability in file TransportConnection.java.

In a third application example for the identification of vulnerable software components, the com/fasterxml/jackson/core/jackson-databind software packages are checked whether they are vulnerable to CVE-2022-42004.

All versions of the jackson-databind package are in Maven at https://repo1.maven.org/maven2/com/fasterxml/jackson/core/jackson-databind. For this example, the analysis is limited to versions 2.12.7.1, 2.13.3 and 2.13.4.

In a first step, the JAR source code files for the mentioned versions are downloaded from the Maven repository mentioned above. Next, the JAR files are unpacked such that the versions of the package are located on a disk drive.

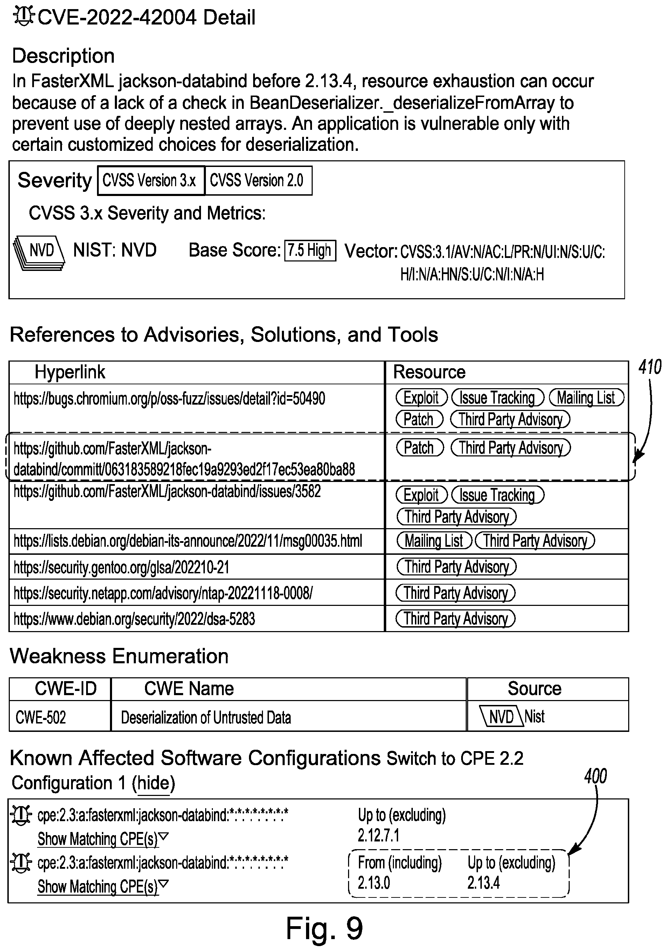

Next, the entry for CVE-2022-42004 in the National Vulnerability Database nvd.nist.gov/vuln/detail/CVE-2022-42004 is checked (see Fig. 9). According to this entry, all versions before 2.13.4 are vulnerable (field 400). In addition, a link to a patch (field 410) is provided in the GitHub repository. The link is github.com/FasterXML/jackson-databind/commit/063183589218fec19a9293ed2f17ec53ea80ba88 pointing to version 2.17 of the package. According to the GitHub commit 0631835, four files were changed, namely file VERSION-2.x of the release notes, file DeserializationFeature.java, file BeanDeserializer.java and file DeepArrayWrappingForDeser3582Test.java. The last-mentioned file ending with Test.java is omitted for the reasons mentioned above. The first mentioned file is omitted too since it does not concern a source code file but release notes. The second mentioned file is omitted too because the amended lines
** NOTE: only <b>single<lb> wrapper Array is allowed: if multiple attempted, exception*
** will be thrown.*
*
contain comments only.

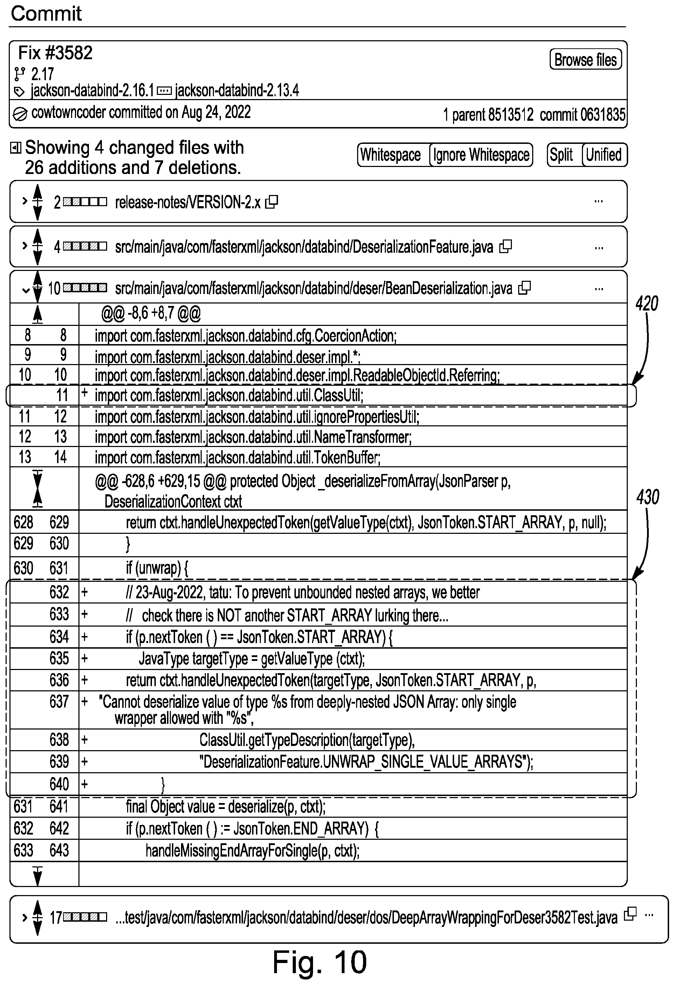

In version 2.17 of the package, lines 11 and 632-640 in the file BeanDeserializer.java were added in order to remedy the vulnerability (see Fig. 10). No lines were removed. Hence, the 1^{st} set of lines added to the patched file comprises 10 lines; the 2^{nd} set of lines removed from the patched file is empty.

The 1^{st} set of lines is (see Fig. 10, fields 420 and 430):

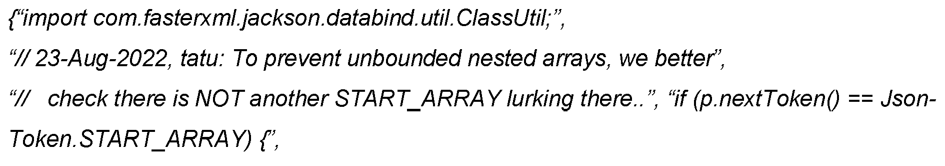

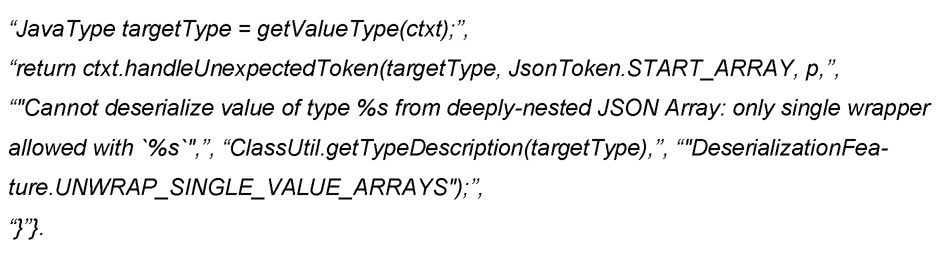

In order to remove very short or very common code fragments from the set of lines causing or fixing a vulnerability, some pre-filtering of code lines is done. In particular, very short lines with less than 5 characters, e.g. "}", ")}" etc., as well as code lines that only consist of very common code statements, which do not contain any custom code, are removed from the respective set. E.g., the line "*System.out.print('\n');*" would be filtered out, but the line *"System.out.print(specifcVariableName);"* would remain in the set. The purpose of pre-filtering is to avoid that our algorithm picks up random code lines that are not related to a specific commit that is fixing/causing a vulnerability. Filtering the set of lines fixing the vulnerability removes line 10 from the set.

The analysis is started with version 2.13.3 of the package. Executing the following commands 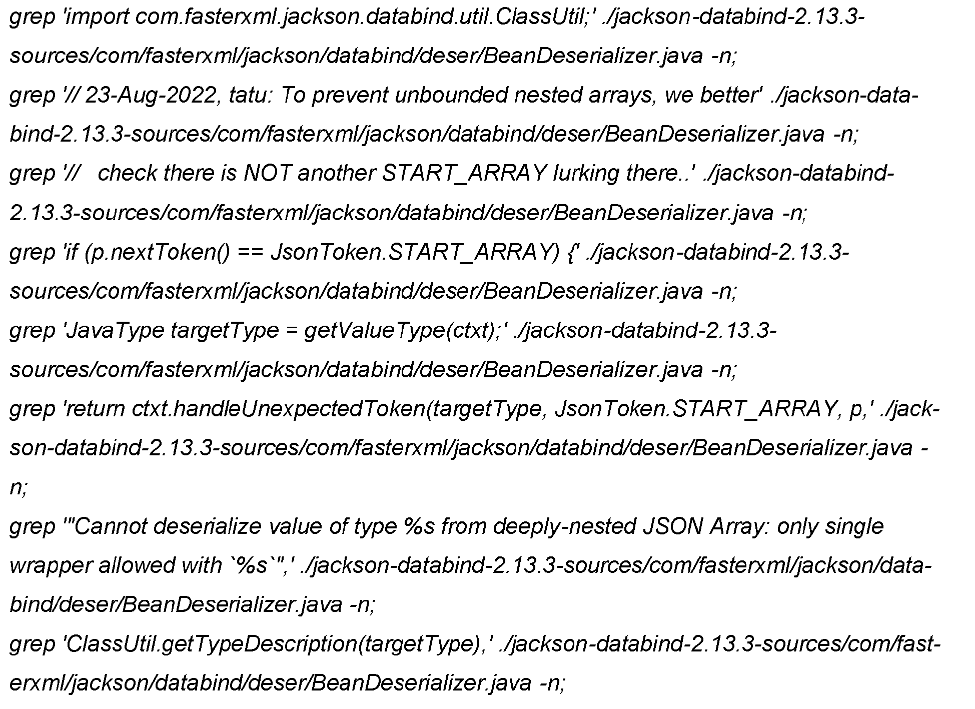 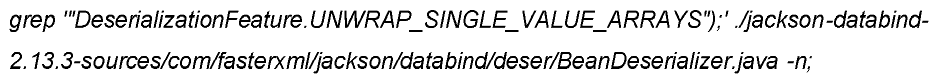 in BASH delivers no results, i.e., the 1st set of lines being added to the patched file is not present in version 2.13.3 of the file BeanDeserializer.java. Thus, version 2.13.3 of the package is vulnerable.

Next, version 2.13.4 is checked. The commands above are changed from 2.13.3 to 2.13.4 and executed again. The output yields that all lines in the 1^{st} set of lines are present in the respective file at line numbers 11 and 632-639. Thus, version 2.13.4 of the package is not vulnerable.

Finally, version 2.12.7.1 is checked. The commands above are changed to 2.12.7.1 and executed again. The output yields that all lines in the 1^{st} set of lines are present in the respective file at line numbers 11 and 632-639. Thus, also version 2.12.7.1 of the package is not vulnerable too.

The described method for identifying vulnerable software packages in a code repository is neither limited to Java source code nor to the command provided on the Windows or Linux/Unix command line. In addition, the method is not limited to the identification of a single CVE. It is possible, e.g., to download all JAR source code packages for the Java Springframework (see https://repo1.maven.org/maven2/org/springframework) and perform the analysis using for CVEs pointing to the respective software packages.

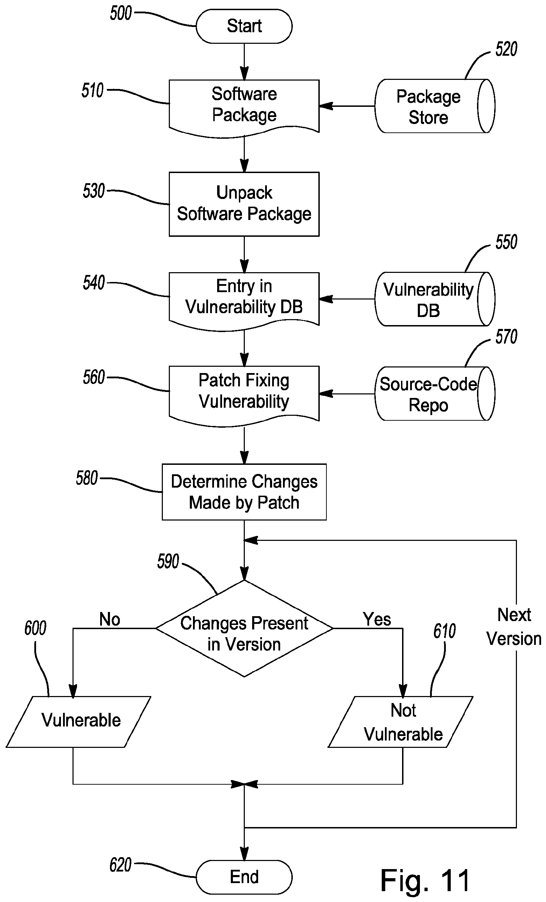

Fig. 11 shows a schematic overview of the main steps in performing the computer-implemented method for identifying vulnerable software. After starting the method in step 500, a software package is retrieved in step 510, e.g., from a package storage such as the Maven package repository 520. The downloaded software package is unpacked in step 530 such that source-code files for at least one version of the software package are available on the local hard disk. In step 540 an entry is retrieved from a vulnerability database such as NVD 550. Next in step 560, a patch is received for fixing the vulnerability. Typically, the patch is downloaded from a source-code repository 570 such as GitHub. In step 580, the changes made by the patch to the source-code files are determined and in step 590, the computer processor decides for each version of the software package whether the changes are present or not. In case the changes made by the patch to remedy the vulnerability are present, the specific version of the software package is considered to be not vulnerable, see step 610. Otherwise, the version is considered to be vulnerable, step 600. After analyzing all versions of the software package, the method ends with step 620.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways.

## Claims

1. A computer-implemented method for identifying vulnerable software, comprising:
- receiving, by a computer processor, a software package;
- for two or more versions of software associated with the software package, unpacking, by the computer processor, source code files for the two or more version of software;
- retrieving, by the computer processor, an entry for the software package from a vulnerability database, where the entry in the vulnerability database relates to a known vulnerability of the software package;
- retrieving, by the computer processor, a patch for the software package fixing the known vulnerability;
- determining, by the computer processor, changes made by the patch to source code files of the software package; and
- for each of the two or more versions of software associated with the software package, determining, by the computer processor, whether the changes were made to a given version of software and reporting the given version of software as vulnerable in response to a determination the changes were absent from the given version of software.

2. The method of claim 1 reporting the given version of software as patched in response to a determination the changes were present in the given version of software.

3. The method of claim 1 or 2 wherein retrieving a patch for the software package further comprises extracting a link to the patch from the retrieved entry and linking to the patch in a source code repository using the link to the patch.

4. The method of any one of the preceding claims wherein determining whether the changes were made to a given version of software include comparing a text string from the patch to text in source code files of the given version of software.

5. The method of any one of the preceding claims wherein determining whether the changes were made to a given version of software includes checking whether one or more lines from the patch have been added to the source code files of the given version of software.

6. The method of claim 5 wherein checking whether one or more lines from the patch have been added to the source code files of the given version of software includes ignoring a given line of the one or more lines from the patch, where the given line is comprised of less than a predefined number of characters.

7. The method of claim 5 or 6 wherein determining whether the changes were made to a given version of software includes checking whether one or more lines from the patch have been added to the source code files of the given version of software in same sequence as in the patch.

8. The method of any one of claims 5 to 7 wherein determining whether the changes were made to a given version of software includes checking whether one or more lines from the patch have been added to the source code files of the given version of software at same location as in the patch.

9. The method of any one of the preceding claims wherein determining whether the changes were made to a given version of software includes checking whether one or more lines have been removed from the source code files of the given version of software in accordance with the patch.

10. The method of claim 9 wherein checking whether one or more lines from the patch have been removed from the source code files of the given version of software includes ignoring a given line of the one or more lines from the patch, where the given line is comprised of less than a predefined number of characters.

11. The method of claim 9 or 10 wherein determining whether the changes were made to a given version of software includes checking whether one or more lines from the patch have been removed from the source code files of the given version of software in same sequence as in the patch.

12. The method of any one of the preceding claims wherein determining whether the changes were made to a given version of software includes, for a given source code file, accessing a file history for the given source code file and, for the given version of software, analyzing the given version of software using corresponding name for the given source code file from the file history.

13. The method of any one of the preceding claims insofar as dependent from claim 2 further comprises reporting a version number for the given version of software, a group identifier for the given version of the software in a code repository, and an artifact identifier for the given version of the software in a code repository.

14. The method of any one of the preceding claims further comprises changing a topology of a computer system in response to a determination the changes were absent from the given version of software.

15. A non-transitory computer-readable medium having computer-executable instructions that, upon execution of the instructions by a processor of a computer, cause the computer to:
- receive a software package;
- for two or more versions of software associated with the software package, unpack source code files for the two or more version of software;
- retrieve an entry for the software package from a vulnerability database, where the entry in the vulnerability database relates to a known vulnerability of the software package;
- retrieve a patch for the software package fixing the known vulnerability; determine changes made by the patch to source code files of the software package; and
- for each of the two or more versions of software associated with the software package, determine whether the changes were made to a given version of software and report the given version of software as vulnerable in response to a determination the changes were absent from the given version of software.
